Europäisches Patentamt

European Patent Office

Office européen des brevets

(11) Publication number: 0 337 571

A1

## EUROPEAN PATENT APPLICATION

(21) Application number: 89200899.6

(51) Int. Cl.⁴: A23K 1/18

(22) Date of filing: 12.04.89

(30) Priority: 15.04.88 NL 8800981

(43) Date of publication of application:
18.10.89 Bulletin 89/42

(84) Designated Contracting States:
AT BE CH DE ES FR GB GR IT LI LU NL SE

(71) Applicant: TROUW INTERNATIONAL B.V.
Veerstraat 38
NL-5831 JN Boxmeer(NL)

(72) Inventor: Caris, Joseph Antonius Marie
Nijverheidsweg 2
NL-3881 La Putten(NL)

(74) Representative: Elzas, Salomon, Drs. et al
Octrooibureau Polak & Charlouis Laan
Copes van Cattenburch 80
NL-2585 GD The Hague(NL)

(54) Pet food.

(57) The invention relates to a pet food which has the shape of regularly or irregularly shaped flat particles having a thickness of 1-6 mm and a surface area of 40-700 mm². In case of a dog food the thickness is 1.5-6 mm and the surface area 100-700 mm², and in the case of a cat food the thickness is 1-4 mm and the surface area 40-200 mm².

EP 0 337 571 A1

## Pet food

This invention relates to a pet food.

Pet foods, particularly dog food, but also cat food and food for other kinds of pets, is often prepared and given to the animals in the form of lumps. In fact, by doing so one has adapted the shape to the "taste" of the humans, without thinking of the possibility whether perhaps the animal would prefer a different shape.

GB-A-1,440,116 discloses in example 1 a plasticised product which has been extruded into pieces 3,16 "in diameter and 1/2" long. This product can be used as a pet food, but it concerns here cylindrical particles, which are not flaky.

EP-A-0 088 574 discloses an animal foodstuff in the form of a hard closed external shell, in the internal space whereof a second animal food formulation is present which has a different degree of subdivision or consistency. Preferably this product is cushion-shaped and according to claim 3 the external shell is generally square with an edge length of 2-3 cm, a maximum overall thickness from 1/4 to 2/3 its edge length and of a maximum separation between internal opposed faces of 1-4 times the wall thickness. It will be clear from the above that these particles are not flaky and that shape and composition of these particles are rather complicated.

EP-A-0 129 235 relates to a process for preparing a product from starch-containing starting materials, wherein the product having a moisture content of 20-30 weight % is passed through the nip of heated rollers and in this way is shaped to a product having a thickness of 0.05-0.2 mm. Although according to claim 15 and according to the specification such a product could be used as a pet food, no examples thereof have been given, and of course such a product, exclusively made from starchy products is not a complete pet food. Moreover, the thickness is much too small for the present purposes.

Surprisingly, it has now been found that the lumps are much better ingested by the animals, if they generally have the shape of flakes.

Accordingly, the invention provides a pet food which is characterized by the fact that it has the shape of either regularly or irregularly shaped, flaky particles having a thickness of 1-6 mm and a surface having an area of 50-700 mm².

In the case of a dog food the thickness is 1.6-6 mm and the area 100-700 mm² and in the case of a cat food the thickness is 1-4mm and the area 40-200 mm². The particles of the invention in the case of dog food preferably have a thickness of 2-4 mm and a surface having an area of 250-400 mm², the larger and smaller dimension of the particle surface preferably being no more than 30 mm and at least 10 mm, respectively. In the case of cat food the particles preferably possess a thickness of 1-3 mm and a surface having an area of 50-150 mm², wherein the particles preferably possess a large and small dimension of the surface of no more than 15 mm and at least 5 mm respectively.

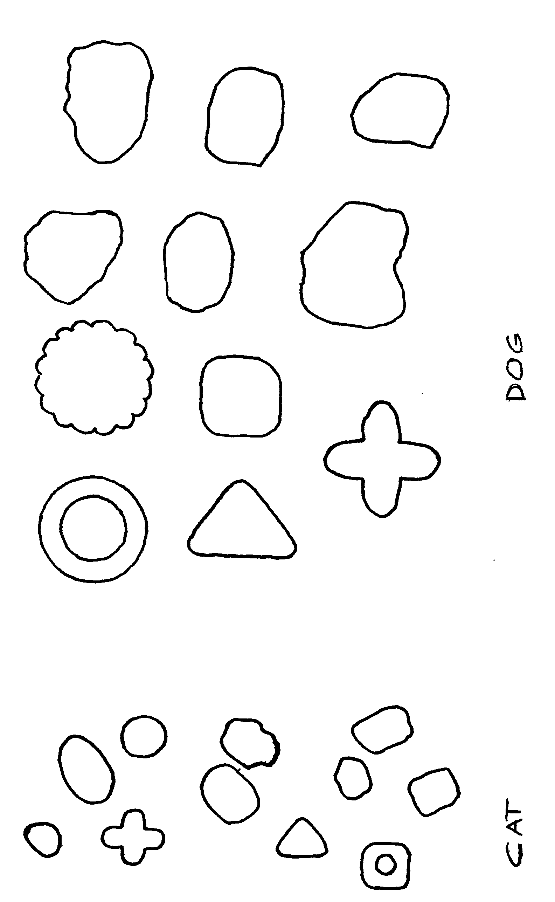

Some representative shapes have been rendered in the attached drawing.

The manufacture of the food in a shape according to the invention can be carried out in various ways. Thus, after a usual extrusion, if desired preceeded by expansion, the obtained lumps can be rolled and dried. In this way variable shapes are obtained. Instead thereof it is also possible to cut thin disks from the material leaving the extruder, and in this way more equal shapes are obtained. To this end one can also use an extruder provided with a slit-shaped dye, and cut the extrudate to the desired length.

Still another method is to prepare a thin sheet of a dough having the composition desired for the food, and to cut or punch this sheet to the desired shapes, whereafter the product is dried and/or baked. Of course, thereby shapes are obtained which are dependent on the nature of the cutting or punching device. Also the sheet can be simply broken into pieces, whereby variable shapes are obtained again.

For the purposes of the invention the composition of the food is not important. The food can be e.g. a complete food or a so-called supplementary food, which is intended for using e.g. with meat or meat offals. A complete food may contain for instance 20-30% of meat meal, 3-6% of bone meal, 1.5-3.5% of soy bean meal, 60-70% of cereal products and 1.5-3.5% of a premix of minerals and vitamins and the like.

Meat, fish and the like also can be added at some suitable time, as a partial replacement of meat meal.

Fat can be added after drying.

A supplementary food contains for instance cereal or cereal products with 1-7% of a premix of minerals and vitamins. After drying fat can be added to such a supplementary food.

The above has only been stated by way of example and by choosing a suitable composition of the food and/or contingently by adding colouring agents, various shades can also be adjusted, and in this way even more variation can be attained. All this is generally known and is generally used.

A series of experiments was carried out with groups of Beagle dogs. Two identical foods were used, one in the shape of irregular flakes according to the invention and one in the shape of lumps. Both foods had the following composition:

|  | % |
|---|---|
| meat meal | 25 |
| bone meal | 5 |
| soy bean meal | 2.5 |
| cereal products | 65 |
| premix of vitamins and nminerals | 2.5 |

The lumps were dried immediately after extrusion and then coated with fat and, if necessary, flavouring agent. The flakes were passed through rollers after extrusion and thereafter dried and coated.

As a check, the moisture and fat contents of both the lumps and the flakes were determined analytically.

The dogs could eat of both foods ad libitum and during experiments lasting for 5 days it was recorded how much the dogs had used on an average of each of the two foods per day; from this a preference for one kind or the other could be calculated. The preference has been indicated in preference days, and the sum of these days in the product of the number of days (5) and the number of animals in the group. The results are as follows:

### Test 1

| Flakes having a moisture content of 9.9% and a fat content of 10.0%; Lumps having a moisture content of 9.9% and a fat content of 10.3% | | | | | |
|---|---|---|---|---|---|
| Group | Number of animals | Average daily intake, g | | Preference days | |
| | | flakes | lumps | flakes | lumps |
| A | 14 | 225 | 95 | 59.5 | 10.5 |
| B | 12 | 255 | 106 | 46 | 14 |
| C | 7 | 199 | 111 | 26 | 9 |
| % of total intake: | | 69 | 31 | | |

### Test 2:

| New batch, flakes having a moisture content of 9.0% and a fat content of 10.0%; lumps having a moisture content of 9.0% and a fat content of 10.1% | | | | | |
|---|---|---|---|---|---|
| Group | Number of animals | Average daily intake, g | | Preference days | |
| | | flakes | lumps | flakes | lumps |
| A | 14 | 209 | 142 | 46 | 24 |
| B | 12 | 238 | 112 | 45 | 15 |
| C | 7 | 251 | 136 | 26 | 9 |
| % of total intake; | | 64 | 36 | | |

Test 3:

| New food batch; flakes having a moisture content of 8.4% and a fat content of 9.8% lumps having a moisture content of 8.6% and a fat content of 10.9% | | | | | |
|---|---|---|---|---|---|
| Group | Number of animals | Average daily intake, g | | Preference days | |
| | | flakes | lumps | flakes | lumps |
| A | 14 | 290 | 106 | 62 | 8 |
| B | 12 | 307 | 80 | 54 | 6 |
| C | 8 | 244 | 120 | 31 | 9 |
| % of total intake: | | 73 | 27 | | |

Test 4:

| Same food after storage for 7 weeks | | | | | |
|---|---|---|---|---|---|
| Group | Number of animals | Average daily intake, g | | Preference days | |
| | | flakes | lumps | flakes | lumps |
| A | 13 | 236 | 108 | 51 | 14 |
| B | 11 | 238 | 118 | 43 | 12 |
| C | 8 | 202 | 121 | 30 | 10 |
| % of total intake: | | 66 | 34 | | |

Test 5:

| Experiments with same product, but without a fat coating; flakes having a moisture content of 10.7%, lumps having a moisture content of 10.3% | | | | | |
|---|---|---|---|---|---|
| Groups | Number of animals | Average daily intake, g | | Preference days | |
| | | flakes | lumps | flakes | lumps |
| A | 13 | 154 | 61 | 54 | 11 |
| B | 12 | 140 | 88 | 44 | 16 |
| % of total intake: | | 66 | 34 | | |

N.B.: The food without a coating is less palatable to the animals, which is the reason why a lower total consumption is found. However, this test was carried out in order to exclude a possible effect of a difference in penetration of the fat into the flakes, as compared with the lumps.

Tests with cat food were carried out which lasted for 4 days. Three kinds of cat food were used, each time both in the form of flakes and of lumps; the results are as follows:

| Test | Number of cats | Type of food | Average daily intake, g | | Preference days | |
|------|------|------|------|------|------|------|
| | | | flakes | lumps | flakes | lumps |
| 1 | 23 | light meat | 49 | 39 | 51 | 41 |
| 2 | 21 | dark meat | 47 | 30 | 50 | 34 |
| 3 | 20 | chicken | 66 | 24 | 62 | 18 |

N.B.: As is generally known, cats show a more dainty eating behaviour than dogs. Moreover, cat food is a.o. characterized by a higher protein content.

It appears from the above results that surprisingly with identical composition of the food the shape has a great influence on the preference of the animals and on the amount consumed by the animals.

**Claims**

1. Pet food, characterized by the fact that it has the shape of regularly or irregularly shaped, flat particles having a thickness of 1-6 mm and a surface area of 40-700 mm$^2$.

2. Food according to claim 1, characterized in that it is a dog food having a thickness of 1.5-6 mm and a surface area of 100-700 mm$^2$.

3. Food according to claim 2, characterized in that the particles have a thickness of 2-4 mm and a surface area of 250-400 mm$^2$.

4. Food according to either claim 2 or claim 3, characterized in that the smallest dimension in the plane is 10 mm and the largest dimension is 30 mm.

5. Food according to claim 1, characterized in that it is a cat food the particles of which have a thickness of 1-4 mm and a surface area of 40-200 mm$^2$.

6. Food according to claim 5, characterized in that the particles have a thickness of 1-3 mm and a surface area of 50-150 mm$^2$.

7. Food according to either claim 5 or claim 6, characterized in that the smallest dimension in the plane is 5 mm and the largest dimension is 15 mm.

8. Food according to any of claims 1-7, characterized in that the particles are shaped irregularly.

9. Food according to any of claims 1-8, characterized in that it is a complete food.

10. Food according to any of claims 1-8, characterized in that it is a supplementary food.

DOG

CAT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-2 385 068 (C.H. ESHBAUGH et al.)<br>* Page 3, left-hand column, lines 3-28, left-hand column, line 74 - right hand column, line 8 * | 1-3,8,9 | A 23 K 1/18 |
| D,X | GB-A-1 440 116 (UNCLE BEN'S OF AUSTRALIA PTY LTD)<br>* Page 4, exemple no. 1; page 1, lines 11-14 * | 1,2,9 | |
| X | DE-A-3 031 896 (E. MÜLLER)<br>* Claim; page 3, line 24 - page 4, line 12 * | 1,9 | |
| A | PATENT ABSTRACTS OF JAPAN, vol. 11, no. 163 (C-424)[2610], 26th May 1987; & JP-A-61 293 351 (TAIYO FISHERY CO., LTD) 24-12-1986<br>* Abstract * | 1,10 | |
| D,A | EP-A-0 088 574 (QUAKER FRANCE S.A.)<br>* Claims 1-3; page 1, lines 1-2; page 2, line 26 - page 3, line 18 * | 1-3,9 | **TECHNICAL FIELDS SEARCHED (Int. Cl.4)** |
| D,A | EP-A-0 129 235 (GEBRÜDER BÜHLER AG)<br>* Claims 1,15 * | 1 | A 23 K<br>A 01 K |
| A | US-A-2 138 177 (E. KRUGER et al.)<br>* Page 2, left-hand column, lines 43-52 * | 1 | |
| A | DE-A-2 063 814 (U. BAENSCH)<br>* Claims 1,4; page 3, last paragraph * | 1 | |

The present search report has been drawn up for all claims

| Place of search | Date of completion of the search | Examiner |
|---|---|---|
| THE HAGUE | 20-07-1989 | DEKEIREL M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)